# EUROPEAN PATENT SPECIFICATION

(11) **EP 4 065 792 B1**
(45) Date of publication and mention of the grant of the patent: **16.07.2025**
(21) Application number: 20808402.0
(22) Date of filing: 18.11.2020
(51) Int. Cl.: E04D 13/00, E04D 13/03, B32B 17/10, E06B 3/66, E04D 13/035

(54) **ROOF WINDOW WITH AN ACOUSTIC LAMINATED VACUUM INSULATED GLASS UNIT**
DACHFENSTER MIT EINER AKUSTISCH LAMINIERTEN VAKUUMISOLIERTEN GLASEINHEIT
FENÊTRE DE TOIT DOTÉE D'UNE UNITÉ EN VERRE À ISOLATION SOUS VIDE STRATIFIÉE ACOUSTIQUE

(30) Priority: 26.11.2019 DK PA201970730
(43) Date of publication of application: 05.10.2022
(73) Proprietor: VKR Holding A/S, 2970 Hørsholm (DK)
(72) Inventor: ANDERSEN, Søren Vejling, 2970 Hørsholm (DK); BOUWENS, Willibrordus Servatius, 2970 Hørsholm (DK)
(74) Representative: Høiberg P/S
(86) International application number: PCT/EP2020/082529
(87) International publication number: WO 2021/104964

(56) References cited:
- WO-A1-2012/157616
- WO-A1-2016/053700
- WO-A1-2019/219593
- US-A- 5 368 917
- US-A1- 2018 082 669
- US-A1- 2018 108 340
- US-A1- 2019 106 931

## Description

### Technical field

The present invention relates to a roof window comprising a frame and a laminated vacuum insulated glass (laminated VIG) unit fixed in said frame.

### Background

Vacuum insulated glass (VIG) units provides superior insulating properties. A VIG unit normally comprises a pair of glass sheets separated by a gap between the glass sheets, and a plurality of support structures such as pillars are distributed in the gap. An edge seal, such as a rigid edge seal seals the gap at the periphery of the VIG unit. The edge sealing may comprise a solder glass material or a metal solder material, and the gap is normally evacuated to a pressure below 10⁻³ bar, such as below 10⁻⁴ bar, e.g. to about or below 10⁻³ mbar, and the support structures in the gap helps to maintain the gap.

A VIG unit may for safety reasons be laminated at one, or both, of the sides in order to avoid glass falling down in case a glass sheet of the VIG unit breaks. Further, using laminated glass in a VIG unit may improve the performance of the VIG unit in other ways. One such improvement can be noise abatement since noise problems in our environment is a growing problem today due to denser build environment, more automobiles in the streets etc. VIG units are for instance known from US 2019/106931 A1, WO 2012/157616 A1 and WO 2019/219593 A1.

Further, a specific noise problem is observed when it rains. This is specifically a problem with roof windows.

The present disclosure provides an improved solution for a roof window with a laminated VIG unit for noise abatement when it rains.

### Summary

The present invention relates in one aspect to a roof window according to claim 1, comprising a frame and a laminated vacuum insulated glass (laminated VIG) unit fixed in said frame, the laminated VIG unit comprising:
a first glass sheet and a second glass sheet, wherein the first and second glass sheets are separated by an evacuated gap, and wherein a plurality of support structures are distributed inside the evacuated gap between the first and second glass sheets,
a lamination layer arranged between the first glass sheet and a further sheet, said lamination layer is bonding to an outer major surface of the first glass sheet facing the evacuated gap, wherein the lamination layer comprises at least a first layer and a second layer of a polymer material,
wherein, when the roof window is exposed to impacts; the fluctuation in decibel (dB) over a range of 1000 Hz in the interval from 20 Hz to 13000 Hz will not exceed 10 dB.

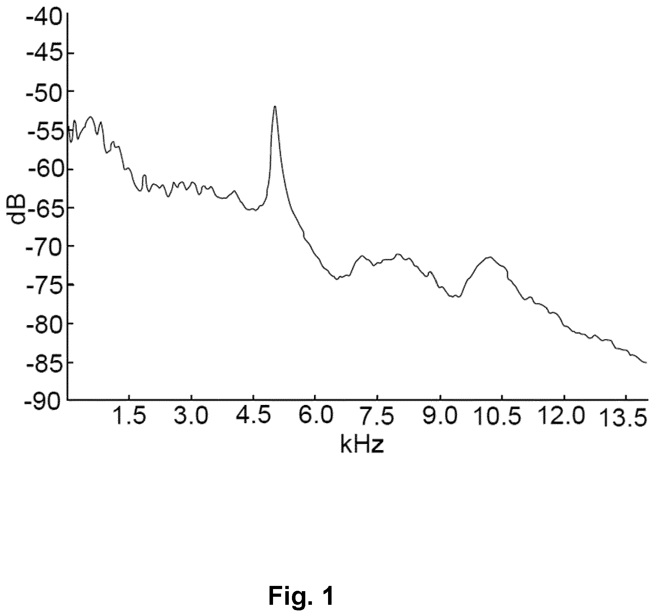

Tests has shown that roof windows has acoustic noise problems, for example when it rains, specifically in an interval that is audible for the human ear, where the sound is perceived as a high pitch. This is also shown in figure 1.

To minimise these noise problems, the inventors has developed a roof window with a lamination layer which when exposed to impacts such as sound waves; the fluctuation in decibel (dB) over a range of 1000 Hz in the interval from 20 Hz to 13000 Hz will not exceed 10 dB.

Hence, the roof window according to the present invention minimises these resonance peaks.

### Brief description of drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples.

They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described. Aspects of the present disclosure will be described in the following with reference to the figures in which:
fig. 1: shows a graphically illustration of an acoustic measurement in a sound lab of a standard laminated VIG unit.
fig. 2: shows a roof window system.
fig. 3 a and b: schematically shows a laminated VIG unit.

### Detailed description

The present invention relates in one aspect to a roof window according to claim 1, comprising a frame and a laminated vacuum insulated glass (laminated VIG) unit fixed in said frame, the laminated VIG unit comprising:
a first glass sheet and a second glass sheet, wherein the first and second glass sheets are separated by an evacuated gap, and wherein a plurality of support structures are distributed inside the evacuated gap between the first and second glass sheets,
a lamination layer arranged between the first glass sheet and a further sheet, said lamination layer is bonding to an outer major surface of the first glass sheet facing the evacuated gap, wherein the lamination layer comprises at least a first layer and a second layer of a polymer material,
wherein, when the roof window is exposed to impacts; the fluctuation in decibel (dB) over a range of 1000 Hz in the interval from 20 Hz to 13000 Hz will not exceed 10 dB.

The roof window will have properties that dampens the noise induced by impacts hitting the rood window, such as rain. This will improve the overall acoustic comfort for humans. It is seen that when the roof window is exposed to impacts such as rain, fluctuation peaks in decibel (dB) over a range of 1000 Hz in the interval from 20 Hz to 13000 Hz will not exceed 10 dB.

By the present invention, it is possible to obtain a roof window having improved acoustic insulation, while at the same time maintaining satisfactory characteristics in terms of rigidity, finesse of the look, and light transmission. The improvement of the acoustic insulation/dampening is significant and in particular at the frequency of coincidence, where the glazing usually has a drop in sound insulation performance.

In one or more embodiments, said further sheet may be a glass sheet such as an annealed glass sheet. Annealed glass sheets may have a more plane surface structure, and may be cost efficient to use. In one or more embodiments, said further sheet may be a tempered glass sheet. In one or more embodiments, said further sheet may be a float glass sheet.

In one or more embodiments, the lamination layer comprises a third layer sandwiched in between the first layer and the second layer. The third layer sandwiched in between the first layer and the second layer may be softer than the first layer and the second layer. In one or more embodiments, the third layer is having a glass transition temperature of lower degrees than the first layer and the second layer.

In one or more embodiments, the third layer is of a polymer material.

In one or more embodiments, the polymer material is selected from polyvinyl butyral (PVB) or vinyl acetate-ethylene (EVA).

In one embodiment all three layers are of a PVB material where the third layer is of a flexible PVB material, arranged between the first and the second layer of standard PVB.

The term "standard PVB" in the present application means PVB whose molar content of vinyl butyral units (VB) is included in the following ranges:
the molar level of BV is greater than 42%, such as greater than 46%, such as greater than 50%, such as greater than 52%, such as greater than 53%, such as greater than 54%, such as greater than 55%, and less than 60%, such as less than at 59%, such as less than 58%, such as less than 58%, such as less than 57%, such as less than 56.5%, based on the total number of monomer units of the PVB, the mass content of plasticizers expressed in parts per 100 parts of PVB resin (phr) is greater than 5 phr, such as greater than 10 phr, such as greater than 20 phr, such as greater than 22.5 phr, such as greater than 25 phr, and is less than 120 phr, such as less than 110 phr, such as less than 90 phr, such as less than 75 phr, such as less than 60 phr, such as less than 50 phr, such as less than 40 phr, such as less than 35 phr, such as less than 30 phr, the glass transition temperature for a frequency of 100 Hz, is greater than 30 °C, such as greater than 40 °C, and is less than 60 °C, such as less than 56 °C.

For a given frequency, the tan δ value reaches its maximum value at a temperature, called the glass transition temperature or glass transition point. This tan δ value can be estimated using a viscoanalyzer or other suitable known device. The tan δ value corresponds to a technical characteristic of the nature of a material and reflects its ability to dissipate energy, especially acoustic waves. The tan δ value varies as a function of the temperature and the frequency of the incident wave.

In one or more embodiments, the third layer is having a tan δ value greater than or equal to 1.6, at 20 °C in a frequency range between 2 kHz and 8 kHz.

In one or more embodiments, the tan δ value of the third layer is greater than or equal to 2, such as 2.5, such as 3, such as 3.5, such as 4, such as 4.5. The tan δ value is generally less than 5. By having a third middle layer with a relatively higher tan δ value may improve the acoustic insulation performance of the window.

In one or more embodiments, the third layer has a shear parameter g = G '/e of between 4.3 × 10⁹ and 4.5 × 10¹⁰ Pa/m such as between 4.8 × 10⁹ and 5.1 × 10¹⁰ Pa/m, at 20 °C in the frequency range of between 2 kHz and 8 kHz - G 'being the shear modulus of the inner third layer and e being the thickness of the inner third layer. The mechanical characteristics in shear as defined here gives the third layer a satisfactory rigidity and acoustic insulation performance.

In one embodiment, a layer of PVB (the third layer) having a glass transition temperature of 0 °C is sandwiched between two layers of PVB (the first and the second layer) having a glass transition temperature of 20 °C.

In one or more embodiments, a first and a second barrier layer is arranged respectively between said first layer and said third layer and between said second layer and said third layer, and may be composed of a viscoelastic plastic material, preferably polyester, such as polyethylene terephthalate (PET). The barrier layer may prevent any chemical diffusion between the inner third layer, and the two outer layers - the first and the second layer. According to a particular embodiment, at least one of these barrier layers is composed of PET. In one or more embodiment the barrier layers each have a thickness of between 1 and 50 µm, preferably between 1 and 30 µm, preferably between 5 and 15 µm.

In one or more embodiments, at least one of the layers in the lamination layer is a polyethylene terephthalate (PET) material.

In one or more embodiments, the fluctuation in dB over a range of 1000 Hz in the interval from 2000 Hz to 8000 Hz will not exceed 10 dB.

In the frequency range between 2000 Hz and 8000 Hz, which is the range where the human ear is the most sensitive, the improvement of the acoustic insulation/dampening is significant.

In one or more embodiments, the fluctuation in dB over a range of 1000 Hz the interval from 3000 Hz to 7000 Hz will not exceed 10 dB.

In one or more embodiments, the fluctuation in dB over a range of 1000 Hz in the interval from 4500 Hz to 5500 Hz will not exceed 10 dB.

In one or more embodiments, the fluctuation in dB over a range of 4000 Hz in the interval from 20 Hz to 13000 Hz will not exceed 10 dB.

In one or more embodiments, the fluctuation in dB over a range of 5000 Hz in the interval from 20 Hz to 13000 Hz will not exceed 10 dB.

In one or more embodiments, the fluctuation in dB over a range of 4000 Hz in the interval from 2000 Hz to 8000 Hz will not exceed 10 dB.

In one or more embodiments, the fluctuation in dB over a range of 5000 Hz in the interval from 2000 Hz to 8000 Hz will not exceed 10 dB.

In one or more embodiments, the fluctuation in dB over a range of 3000 Hz in the interval from 3000 Hz to 7000 Hz will not exceed 10 dB.

In one or more embodiments, the fluctuation in dB over the whole range of 4000 Hz in the interval from 3000 Hz to 7000 Hz will not exceed 10 dB.

In one or more embodiments, the lamination layer provides an at least 5dB local dampening over said range of 1000 Hz when compared to frequencies above and/or below said range of 1000 Hz, when compared to a similar laminated VIG unit laminated with a single layer PVB material having a thickness between 0.5 and 1.6 mm.

In one or more embodiments, the lamination layer provides an at least 5dB local dampening over said range of 1000 Hz when compared to frequencies above and/or below said range of 1000 Hz, when compared to a similar laminated VIG unit laminated with a standard acoustic PVB layer.

A standard acoustic PVB layer could e.g. be consisting of three layers of PVB, the outer two layers being standard PVB and the middle layer being a PVB plasticised with triethylene glycol bis-2-ethylhexanoate.

In one or more embodiments, the lamination layer provides an at least 5dB local dampening over said range of 1000 Hz when compared to frequencies above and/or below said range of 1000 Hz, when compared to a laminated VIG unit laminated with a lamination layer having some of the same properties in regards to acoustic dampening performance.

In one or more embodiments, the polymer material is selected from polyvinyl butyral (PVB) or vinyl acetate-ethylene (EVA).

In one or more embodiments, the thickness of the lamination layer is between 0.5 mm and 3 mm, such as between 1 mm and 2 mm, such as between 1.4 mm and 1.8 mm.

In one or more embodiments, the thickness of the lamination layer is between 0.5 mm and 1 mm, such as between 0.5 mm and 0.9 mm, such as between 0.6 mm and 0.9 mm.

In one or more embodiments, the thickness of the third layer of the lamination layer is between 80 µm and 300 µm, such as between 100 µm and 200 µm, such as between 120 µm and 160 µm.

In one or more embodiments, the thickness of the third layer of the lamination layer is between 10 µm and 200 µm, such as between 10 µm and 150 µm, such as between 10 µm and 100 µm, such as between 20 µm and 100 µm, such as between 20 µm and 50 µm.

In one or more embodiments, the thickness of the third layer of the lamination layer is between 0.5 µm and 50 µm, such as between 10 µm and 50 µm, such as between 10 µm and 40 µm, such as between 20 µm and 40 µm, such as between 20 µm and 30 µm.

In one or more embodiment, the third layer may be obtained from an aqueous emulsion of at least one polymer material.

In one or more embodiment, the third layer may be a polymerization product of one or more polymers.

In one or more embodiment, the third layer may be a polymerization product of one or more polymers selected from an allyl compound, a vinyl compound, an acrylate compound, a methacrylate compound, an acrylic compound, an acrylamide compound or, a methacrylamide compound.

In one or more embodiment, the third layer may be a polymerization product of two acrylate compounds.

In one or more embodiments, the third layer may be obtained from an aqueous emulsion of at least two polymers e.g. acrylate and acrylic, structured in interpenetrating networks. One example of such an aqueous emulsion of at least two polymers e.g. acrylate and acrylic, is QuickGlue^{®}.

In one or more embodiments, the thickness of the first and/or second layer of the lamination layer is greater than 0.2 mm, such as between 0.2 mm and 1.5 mm, such as between 0.25 mm and 1 mm, such as between 0.25 mm and 0.8 mm.

In one or more embodiments, the three layers in the lamination layer is not of equal thickness. In one embodiment, the first layer and the second layer are of equal thickness and the third layer is of a different thickness than the first layer and the second layer. In one embodiment, the third layer is of less thickness than the first layer and the second layer.

The three layers in the lamination layer may in one embodiment have different characteristics such as different composition, plasticiser ratio, treatment or other measurable characteristics. Hence, in one embodiment, each layer will have a characteristic response to vibration. In one embodiment, the first layer and the second layer have the same characteristics.

The thickness of the glass sheets may be between 1-8 mm, or between 1.5-6 mm, or between 2-5 mm, or between 2.5-4.5 mm.

In one or more embodiments, the first glass sheet and the second glass sheet are tempered, such as thermally tempered glass sheets.

The term "tempered glass sheet" as used herein is understood to mean glass sheets in which compressive stresses have been introduced in the surface(s) of the glass sheet. For glass to be considered strengthened this compressive stress on the surface(s) of the glass can be a minimum of 69 MPa (10,000 psi) and may be higher than 100 MPa. The VIG is heated during production in order to form the periphery seal etc. and some glass strength may be annealed or lost during manufacture.

In one or more examples, the tempered glass sheets have been tempered by thermal tempering, chemical tempering, plasma tempering, or a combination comprising at least one of the foregoing.

Tempered glass, also known as toughened glass, may be produced from annealed glass by means of a strengthening procedure, which e.g. may be thermal tempering, chemical tempering, or plasma tempering with the purpose of introducing the compressive stresses into the surface(s) of the glass sheet. After tempering, the stress developed by the glass can be high, and the mechanical strength of tempered glass can be four to five times greater than that of annealed glass.

The tempered glass sheets may have been tempered by thermal tempering. Thermally tempered glass may be produced by means of a furnace in which an annealed glass sheet is heated to a temperature of approximately 600-700°C, after which the glass sheet is rapidly cooled. The cooling introduces the compressive stresses into the glass sheet surface(s).

A chemical tempering process involves chemical ion exchange of at least some of the sodium ions in the glass sheet surface with potassium ions by immersion of the glass sheet into a bath of liquid potassium salt, such as potassium nitrate. The potassium ions are about 30% larger in size than the replaced sodium ions, which causes the material at the glass sheet surfaces to be in a compressed state. In this process, typically by immersion of the glass sheet into a molten salt bath for a predetermined period of time, ions at or near the surface of the glass sheet are exchanged for larger metal ions from the salt bath. The temperature of the molten salt bath is typically about 400-500°C and the predetermined time period can range from about two to ten hours. The incorporation of the larger ions into the glass strengthens the sheet by creating a compressive stress in a near surface region. A corresponding tensile stress is induced within a central region of the glass to balance the compressive stress.

Plasma tempering of glass sheets resembles the chemical tempering process in that sodium ions in the surface layers of the glass sheet are replaced with other alkali metal ions so as to induce surface compressive stresses in the glass sheet, the replacement is however made by means of plasma containing the replacement ions. Such method may be conducted by using a plasma source and first and second electrodes disposed on opposing major surfaces of a glass sheet, wherein the plasma comprises replacement ions, such as potassium, lithium, or magnesium ions, whereby the replacement ions are driven into the opposing surfaces of the glass sheet so as to increase the strength of the sheet.

In one or more embodiments, the thermal transmittance measured as a U-value ([W/(m²)(K)]), of the laminated VIG unit is below 0.7, such as below 0.6 or below 0.5. These values are when measure at the centre of the VIG unit.

In one or more embodiments, the distance between neighbouring structures of the plurality of support structures is larger than or substantially equal to 30 mm, such as larger than or substantially equal to 40 mm. In one or more embodiments, the distance between neighbouring structures of the plurality of support structures is larger than or substantially equal to 50 mm, such as larger than or substantially equal to 60 mm. The distance between support structures may be measured from an outer edges of adjacent support structures. Alternatively, the distance between support structures may be measured from the centres of adjacent support structures. The support structure-to-support structure distance can be the same or different between each adjacent support structures. The support structures may have a height of 0.05 to 0.7 mm, such as between 0.1 to 0.4 mm, or between 0.15 to 0.3 mm. In one or more examples, the support structures have the same height. This keeps the production cost low as only one type of support structure is needed. The tool used for positioning the support structures on the glass pane will further not need to have individual settings for placing support structures with a difference in height.

The support structures may alternatively have the different heights, including at least two different heights. As the distance between the two glass sheets may vary from region to region in VIG unit, a difference in height of the support structures will allow for compensation of these distance variations. In one or more examples, each support structures independently has a height of 0.05 to 0.7 mm, such as 0.1 to 0.4 mm, or such as 0.15 to 0.3 mm.

The support structures may have a width of between 0.1 to 1 mm, or between 0.2 to 0.8 mm, such as between 0.3 to 0.7 mm. Again, the width of the individual support structures may be the same or may be different.

The support structure can be any suitable material, for example solder glass, a polymer (e.g., Teflon), plastic, ceramic, glass, metal, or the like. In one or more examples, the support structure comprises a steel or a solder glass.

In one or more embodiments, the thickness of the evacuated gap is between 0.05 and 0.5 mm, such as between 0.1 mm and 0.3 mm, such as around 0.1 mm or around 0.2 mm.

Any suitable side seal material known in the industry can be used to seal the VIG unit. The side seal material may be a soldering material, for example a glass solder frit material. The glass solder frit material may have a low melting temperature, wherein thermal treatment can be used to hermetically seal the periphery of the VIG unit.

In one or more embodiments, the laminated VIG unit has a has a size of at least 0.5 m², such as at least 1 m², for example at least 1.5 m² such as at least 2 m², and/or wherein the major surfaces of the VIG unit has a rectangular shape.

In one or more embodiments, the laminated VIG unit has a has a size of between 1 m² and 4 m².

In one or more embodiments, the impacts exposed to the roof window is rain.

It will be understood that, although the terms "first," "second," "third," and the like may be used herein to describe various elements, these elements should not be limited by these terms. These terms are only used to distinguish one element from another element.

"About" "around" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

In relation to the figures described below, where the present disclosure may be described with reference to various embodiments, without limiting the same, it is to be understood that the disclosed embodiments are merely illustrative of the present disclosure that may be embodied in various and alternative forms, within the limits defined by the claims. The figures are not to scale; some features may be exaggerated or minimized to show details of particular components. Therefore, specific structural and functional details disclosed herein are not to be interpreted as limiting, but merely as a representative basis for e.g. teaching one skilled in the art to variously employ the present disclosure.

Fig. 1 illustrates acoustic measurements of a laminated (standard lamination layer) VIG unit made in a sound lab. The measurements are obtained by measuring the impact of a rain source by a microphone (see ad 2 below). The graph is a replicate of a test-graph. It can be seen from the acoustic measurement that the VIG unit has acoustic noise problems, specifically in an interval that is audible for the human ear, where the sound is perceived as a high pitch.

In general, measurement frequency response can be measured in a couple of ways:
1) sound as measured with a microphone where the source is sound
2) sound as measured with a microphone where the source is impingement on the window (e.g. rain, hail)
3) mechanical vibration measurement
4) Response of the construction through impact
5) Imposing vibration through an exciter

### Ad 1)

At the interface of the window/glass pane, vibrational movement energy is converted to air pressure. The movement of air at frequencies and amplitudes where the human ear is sensitive, is then transported through and perceived as sound. The most common way to quantify this is through a microphone where a membrane that is sensitive for air pressure is converted to an electrical signal. Microphones can be placed in the near field < 1.5 m or in the far field >1.5 m, at different locations angled towards the window. Near field measurements are less sensitive for sound from other sources but can have the drawback to pick up sound that is localised meaning that a slight shift in the position can result in a different measurement.

Far field measurement can suffer the same if the source of the sound is from multiple sources that are in phase or slightly out of phase in which case the power of sound becomes directional depending on the amount of sources. In the case of a normal, uniform pane, it is assumed that the source is one single source and far field measurements if done in an anechoic chamber will give reliable results. The measurement are done in two adjacent chambers where in one chamber a source is positioned and in the other chamber, a microphone. In the interface between the chambers a building element is placed and made air tight. A measurement is then carried out where the result is expressed in dB-loss through the building element by substracting the recorded power from the microphone from the output power from the source. Those measurements are standardised (see the below list in table 1) and refer to these standards on the specifics.

### Ad 2)

Typically rain noise measurement is performed in this manner and consist of a rain source positioned x-meter above a window. The window is built in a small chamber facing the rain source. A microphone is positioned in that chamber in the near field because of the sound pressure level being in the lower end. This measurement is standardised (see the below list in table 1).

### Ad 3)

In order to measure vibration, an accelerometer is attached to the VIG unit with e.g. bee wax. The accelerometer measures the displacement in the x-y-z planes in the frequency range that is audible for the human ear. The accelerometer used, expresses the vibration (m^2/s) into decibels (dB) being the same domain as for sound pressure. The type of measurement is used to determine eigenfrequencies for constructions in general, but in this case for glass. The intention is to reveal all the eigenfrequencies fitting to the glass including the eigenfrequencies or change in eigenfrequencies when mounted in a window construction. Measurements should in principle correlate with measurements performed with a microphone but measurements are taken in the stadium where vibration is not turned into sound yet.

### Ad 4)

In combination with either an accelerometer or a microphone, the resulting response of an impacting source can be measured. One way of doing this is by using a pendulum where the end of the pendulum an aluminium ring was mounted. Measurement was carried out in a box made to be as anechoic as possible with sound dampening material mounted on the inside. The VIG was mounted in a vertical position against the box and an accelerometer mounted on the VIG at the side facing the inside of the box. The impingement generates a frequency spectrum that can be analysed and correlated to the impact of rain on a similar construction without using rain. A similar measurement can be done with a microphone mounted in the box.

### Ad5)

A so-called exciter is used to impose vibration onto a pane. An exciter is a loudspeaker where the membrane (or cone) has not been mounted but a flat surface created instead, allowing for mounting this on different surfaces. Exciters can then impose vibrations with varying frequencies and power as this is directly connected to an amplifier typical to a hifi stereo. For measurements of the response of VIG's, an exciter is mounted underneath and contact is assured, either by applying the proper force, of gluing it. The VIG lies flat and a frequency sweep is carried out. In order to visualise the response, white powder was evenly distributed over the VIG.

The outcome of these measurements showed localisation of the vibration. The intensity of vibrations measured between pillars are different from those on the pillars as the powder starts to collect at the pillars at specific frequencies and intensities.

**Table 1 -list of standards:**

| |
|---|
| DS 490 Sound classification of dwellings |
| ISO 140-1-5_REPLACED BY 10140_15186_16283 |
| ISO 140-18_Acoustics-Meas of sound ins in buildings and of elements_Part 18_Lab meas of sound generated by rainfall on building elements |
| ISO 354_Acoustics-Measurement of sound absorption in a reverberation room |
| ISO 717-1_Acoustics-Rating of sound insultion of buildings and of building elements_Part 1_Airborne sound ins |
| ISO 10140-1_Acoustics-Laboratory meas of sound ins of building elements_Part 1_Application rules for specific products |
| ISO 10140-2_Acoustics-Laboratory meas of sound ins of building elements_Part 2_Meas of airborne sound insulation |
| ISO 10140-3_Acoustics-Laboratory meas of sound ins of building elments_Part 3_Meas of impact sound ins A1_2015 |
| ISO 10140-3_Acoustics-Laboratory meas of sound ins of building elments_Part 3_Meas of impact sound ins |
| ISO 10140-4_Acoustics-Laboratory meas of sound ins of building elments_Part 4_Meas proc and req |
| ISO 12354-3 Building acoustics-Estimation of acoustic performance of buildings from the performance elements-Part 3_Airborne sound insulation against outdoor sound |
| ISO 15186-1_Acoustics-Meas of sound ins in building elements using sound intensity _Part 1_Lab meas |
| ISO 15186-2_Acoustics-Meas of sound ins in building elements using sound intensity_Part 2_Field meas |
| ISO 15186-3_Acoustics-Meas of sound ins in building elements using sound intensity _Part 3_Lab meas at low frequencies |
| ISO 16283-1_Acoustics-Field meas of sound ins in building elements_Part 1_Airborne sound ins |
| ISO 16283-1_Acoustics-Field meas of sound ins in building elements_Part 1_Airborne sound ins_A1 2017 |
| ISO 16283-3_Acoustics-Field meas of sound ins in building elements_Part 1_Facade sound ins |
| ISO 19916-1_Glass in building-Vacuumm insulating glass Part 1_Basic specification of products and evaluation methods for thermal and sound insulating performance |

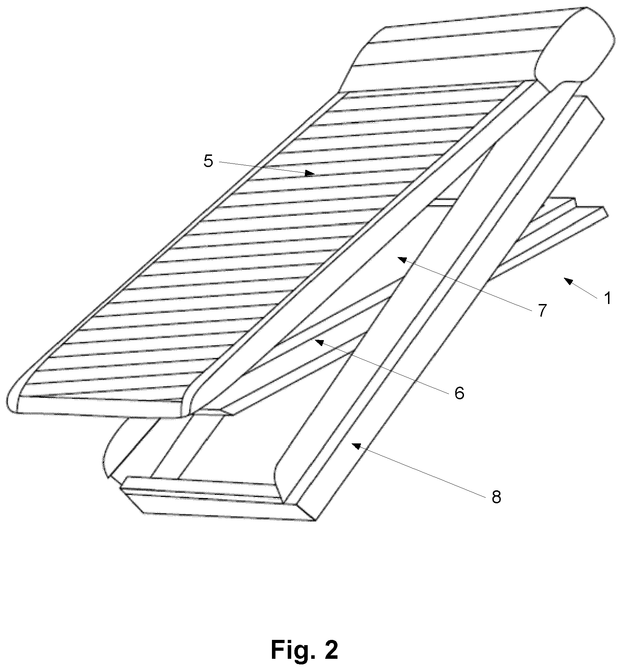

Fig. 2 illustrates schematically one example of a roof window. The roof window 1 comprises an adjustable sash 6 with an insulated glass pane 7 arranged therein. The sash 6 in the example of fig. 2 is a "center pivot" sash, but it may also in other embodiments of the present disclosure be a top-hinged sash. The sash 6 is configured to be moved at a hinged connection, relative to a fixed frame part 8 attached/fixed to a roof construction or the like. The roof construction can be any kind of roof constructions, e.g. a roof with a steep slope or inclination or a roof with almost none or very little inclination. In one embodiment, the inclination can be from 10 degree to 90 degree, or such as from 10 degree to 80 degree.

In further embodiments of the present disclosure (not illustrated), the window 1 may be a horizontal window configured to be arranged in a flat roof of a building.

As can be seen, the system in fig. 2 also comprises an architectural covering 5, in this example a roller shutter, but it may also be a blind such as a venetian blind, a roller blind or the like in further embodiments. The system may also not comprise an architectural covering.

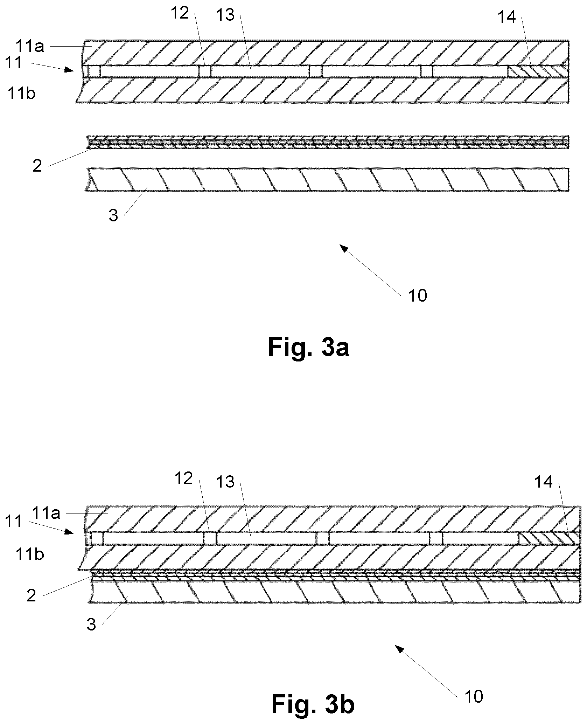

Fig. 3 illustrates schematically, in a cross sectional view, a lamination assembly for providing a laminated VIG unit of a roof window according to embodiments of the present disclosure.

The lamination assembly 10 comprises a vacuum insulated glass (VIG) unit 11. The VIG unit 11 comprises two glass sheets 11a, 11b separated by a plurality of support structures 12 distributed in a gap 13 between the tempered glass sheets 11a, 11b. An edge sealing 14 made from e.g. a soldering material such as a low temperature solder glass material which may be lead free, or alternatively a metal seal, extend between the glass sheets and enclose the gap 13 so it is sealed. The gap 13 may be evacuated to a pressure below 10⁻³ bar such as at or below 10⁻², 10⁻³ or 10⁻⁴ mbar. The evacuation of the gap 13 may e.g. have been established, prior to the lamination, through an evacuation opening (not illustrated in the figures) in one of the glass sheets 11a, 11b which is subsequently sealed to maintain the reduced pressure in the gap 13. One or both of the glass sheets 11a, 11b may be tempered glass sheets such as thermally tempered glass sheets in embodiments of the present disclosure.

The distance D1 between neighbouring support structures 12 of the plurality of support structures 12 in the evacuated gap 13 may in embodiments of the present disclosure be larger than or substantially equal to 30 mm, such as larger than or substantially equal to 40 mm, for example larger than or substantially equal 50 mm or 60 mm.

The lamination assembly 10 moreover comprises a lamination layer 2 arranged between an outer surface of the tempered glass sheets 11b of the VIG unit 11 and a further sheet 3 of the lamination assembly 10. The further sheet 3 may in one or more embodiments of the present disclosure be an annealed glass sheet, it may be a thermally tempered glass sheet, it may be a hard polymer plate transparent to light in the visible range and/or the like, it may be a float glass sheet.

The lamination layer may be according to any one of the disclosed embodiments of the present disclosure. In this figure, the lamination layer 2 is illustrated as comprising three layers.

It is to be understood that the outer surfaces may be coated with a coating layer (not illustrated) in one or more embodiments of the present disclosure.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the claims.

Additionally, while various embodiments or aspects of the present disclosure have been described, it is to be understood that aspects of the present disclosure may include only some of the described embodiments or aspects or combinations of the various embodiments or aspects, within the limits defined by the claims.

Accordingly, the present disclosure is not to be seen as limited by the foregoing description.

## Claims

1. A roof window (1) comprising a frame and a laminated vacuum insulated glass (laminated VIG) unit (11) fixed in said frame, the laminated VIG unit (11) comprising:
a first glass sheet (11b) and a second glass sheet (11a), wherein the first and second glass sheets are separated by an evacuated gap (13), and wherein a plurality of support structures (12) are distributed inside the evacuated gap (13) between the first and second glass sheets, a lamination layer (2) arranged between the first glass sheet (11b) and a further sheet (3), said lamination layer (2) is bonding to an outer major surface of the first glass sheet facing the evacuated gap, wherein the lamination layer (2) comprises at least a first layer and a second layer of a polymer material,
wherein the lamination layer (2) provides that the fluctuation in decibel (dB) over a range of 1000 Hz in the interval from 20 Hz to 13000 Hz will not exceed 10 dB when the roof window is exposed to impacts.

2. A roof window according to claim 1, wherein the lamination layer (2) comprises a third layer of a polymeric material sandwiched in between the first layer and the second layer.

3. A roof window according to claim 2, wherein the third layer is having a glass transition temperature of lower degrees than the first layer and the second layer.

4. A roof window according to any of the preceding claims, wherein the lamination layer (2) provides an at least 5dB local dampening over said range of 1000 Hz when compared to frequencies above and/or below said range of 1000 Hz, when compared to:
- a similar laminated VIG unit laminated with a single layer PVB material having a thickness between 0.5 and 1.6 mm; or
- a similar laminated VIG unit laminated with a standard acoustic PVB layer; or
- a laminated VIG unit laminated with a lamination layer having some of the same properties in regards to acoustic dampening performance.

5. A roof window according to any of claims 2 to 4, wherein the thickness of the third layer of the lamination layer (2) is between 80 µm and 300µm, such as between 100µm and 200µm, such as between 120µm and 160µm; or is between 10 µm and 200 µm, such as between 10 µm and 150 µm, such as between 10 µm and 100 µm, such as between 20 µm and 100 µm, such as between 20 µm and 50 µm; or is between 0.5 µm and 50 µm, such as between 10 µm and 50 µm, such as between 10 µm and 40 µm, such as between 20 µm and 40 µm, such as between 20 µm and 30 µm.

6. A roof window according to any of the preceding claims, wherein the first glass sheet (11b) and the second glass sheet (11a) are tempered, such as thermally tempered glass sheets.

7. A roof window according to any of the preceding claims, wherein the impacts exposed to the roof window is rain.

8. A roof window (1) comprising a frame and a laminated vacuum insulated glass (laminated VIG) unit (11) fixed in said frame, the laminated VIG unit (11) comprising
a first glass sheet (11b) and a second glass sheet (11a), wherein the first and second glass sheets are separated by an evacuated gap (13), and wherein a plurality of support structures (12) are distributed inside the evacuated gap (13) between the first and second glass sheets, a lamination layer (2) arranged between the first glass sheet (11b) and a further sheet (3), said lamination layer (2) is bonding to an outer major surface of the first glass sheet facing the evacuated gap, wherein the lamination layer (2) comprises at least a first layer and a second layer of a polymer material, and wherein the lamination layer further comprises a third layer sandwiched in between the first layer and the second layer.

9. A roof window according to claim 8, wherein the third layer is having a glass transition temperature of lower degrees than the first layer and the second layer.

10. A roof window according to claims 8 or 9, wherein the third layer is of a polymer material.

11. A roof window according to any of the preceding claims 8 to 10, wherein the thickness of the third layer of the lamination layer (2) is between 80 µm and 300µm, such as between 100µm and 200µm, such as between 120µm and 160µm; or . wherein the thickness of the third layer of the lamination layer is between 10 µm and 200 µm, such as between 10 µm and 150 µm, such as between 10 µm and 100 µm, such as between 20 µm and 100 µm, such as between 20 µm and 50 µm; or wherein the thickness of the third layer of the lamination layer is between 0.5 µm and 50 µm, such as between 10 µm and 50 µm, such as between 10 µm and 40 µm, such as between 20 µm and 40 µm, such as between 20 µm and 30 µm.

12. A roof window according to any of the preceding claims 8 to 11, wherein the first glass sheet (11b) and the second glass sheet (11a) are tempered, such as thermally tempered glass sheets.

13. A roof window according to any of the preceding claims 8 to 12, wherein when the roof window is exposed to impacts; the fluctuation in decibel (dB) over a range of 1000 Hz in the interval from 20 Hz to 13000 Hz will not exceed 10 dB; or wherein the fluctuation in dB over a range of 1000 Hz in the interval from 3000 Hz to 7000 Hz will not exceed 10 dB; or wherein the fluctuation in dB over a range of 1000 Hz in the interval from 4500 Hz to 5500 Hz will not exceed 10 dB.

14. A roof window according to any of the preceding claims 8 to 13, wherein the lamination layer (2) provides an at least 5dB local dampening over said range of 1000 Hz when compared to frequencies above and/or below said range of 1000 Hz, when compared to:
- a similar laminated VIG unit laminated with a single layer PVB material having a thickness between 0.5 and 1.6 mm; or
- a similar laminated VIG unit laminated with a standard acoustic PVB layer; or
- a laminated VIG unit laminated with a lamination layer having some of the same properties in regards to acoustic dampening performance.

15. A roof window according to any of the preceding claim 11 to 14, wherein the impacts exposed to the roof window is rain.

## Patentansprüche

1. Dachfenster (1) mit einem Rahmen und einer in dem Rahmen befestigten laminierte vakuumisolierte Glas (laminierte VIG)-Einheit (11), wobei die laminierte VIG-Einheit (11) umfasst:
eine erste Glasscheibe (11b) und eine zweite Glasscheibe (11a), wobei die erste und die zweite Glasscheibe durch einen evakuierten Spalt (13) getrennt sind, und wobei eine Vielzahl von Stützstrukturen (12) innerhalb des evakuierten Spaltes (13) zwischen der ersten und der zweiten Glasscheibe verteilt sind,
eine Laminierungsschicht (2), die zwischen der ersten Glasscheibe (11b) und einer weiteren Scheibe (3) angeordnet ist, wobei die Laminierungsschicht (2) mit einer äußeren Hauptfläche der ersten Glasscheibe, die dem evakuierten Spalt zugewandt ist, verbunden ist, wobei die Laminierungsschicht (2) zumindest eine erste Schicht und eine zweite Schicht aus einem Polymermaterial umfasst,
wobei die Laminierungsschicht (2) vorsieht, dass die Schwankung in Dezibel (dB) über einen Bereich von 1000 Hz im Intervall von 20 Hz bis 13000 Hz nicht größer als 10 dB ist, wenn das Dachfenster Stößen ausgesetzt ist.

2. Dachfenster nach Anspruch 1, **dadurch gekennzeichnet, dass** die Laminierungsschicht (2) eine dritte Schicht aus einem polymeren Werkstoff zwischen der ersten Schicht und der zweiten Schicht angeordnet ist.

3. Dachfenster nach Anspruch 2, **dadurch gekennzeichnet, dass** die Glasübergangstemperatur der dritten Schicht niedriger als die Glasübergangstemperatur der ersten Schicht und der zweiten Schicht ist.

4. Dachfenster nach einem der vorhergehenden Ansprüche, wobei die Laminierungsschicht (2) eine lokale Dämpfung von mindestens 5 dB über den Bereich von 1000 Hz im Vergleich zu Frequenzen oberhalb und/oder unterhalb des Bereichs von 1000 Hz im Vergleich zu:
eine ähnliche laminierte VIG-Einheit, die mit einem einlagigen PVB-Material laminiert ist, das eine Dicke zwischen 0,5 und 1,6 mm aufweist; oder
eine ähnliche laminierte VIG-Einheit, die mit einer Standardakustischen PVB-Schicht laminiert ist; oder
eine laminierte VIG-Einheit, die mit einer Laminierungsschicht laminiert ist, die hinsichtlich des akustischen Dämpfungsverhaltens einige der gleichen Eigenschaften aufweist.

5. Dachfenster nach einem der Ansprüche 2 bis 4, wobei die Dicke der dritten Schicht der Laminierungsschicht (2) zwischen 80 µm und 300 µm, wie zwischen 100 µm und 200 µm, wie zwischen 120 µm und 160 µm; oder zwischen 10 µm und 200 µm, wie zwischen 10 µm und 150 µm, wie zwischen 10 µm und 100 µm, wie zwischen 20 µm und 100 µm, wie zwischen 20 µm und 50 µm; oder zwischen 0,5 µm und 50 µm, wie zwischen 10 µm und 50 µm, wie zwischen 10 µm und 40 µm, wie zwischen 20 µm und 40 µm, wie zwischen 20 µm und 30 µm liegt.

6. Dachfenster nach einem der vorhergehenden Ansprüche, wobei die erste Glasscheibe (11b) und die zweite Glasscheibe (11a) temperiert sind, wie thermisch temperierte Glasscheiben.

7. Dachfenster nach einem der vorhergehenden Ansprüche, wobei die Stöße, die dem Dachfenster ausgesetzt sind, Regen ist.

8. Dachfenster (1) mit einem Rahmen und einer in dem Rahmen befestigten laminierte vakuumisolierte Glas (laminierte VIG) - Einheit (11), wobei die VIG-Einheit (11) umfasst:
eine erste Glasscheibe (11b) und eine zweite Glasscheibe (11a), wobei die erste und die zweite Glasscheibe durch einen evakuierten Spalt (13) getrennt sind, und wobei eine Vielzahl von Stützstrukturen (12) innerhalb des evakuierten Spaltes (13) zwischen der ersten und der zweiten Glasscheibe verteilt sind,
eine Laminierungsschicht (2), die zwischen der ersten Glasscheibe (11b) und einer weiteren Scheibe (3) angeordnet ist, wobei die Laminierungsschicht (2) mit einer äußeren Hauptfläche der ersten Glasscheibe, die dem evakuierten Spalt zugewandt ist, verbunden ist, wobei die Laminierungsschicht (2) zumindest eine erste Schicht und eine zweite Schicht aus einem Polymermaterial umfasst, und wobei die Laminierungsschicht ferner eine dritte Schicht umfasst, die zwischen der ersten Schicht und der zweiten Schicht sandwichartig angeordnet ist.

9. Dachfenster nach Anspruch 8, **dadurch gekennzeichnet, dass** die Glasübergangstemperatur der dritten Schicht niedriger als die Glasübergangstemperatur der ersten Schicht und der zweiten Schicht ist.

10. Dachfenster nach Anspruch 8 oder 9, wobei die dritte Schicht aus einem Polymermaterial besteht.

11. Dachfenster nach einem der vorhergehenden Ansprüche 8 bis 10, wobei die Dicke der dritten Schicht der Laminierungsschicht (2) zwischen 80 µm und 300 µm beträgt,
wie zwischen 100 µm und 200 µm, wie zwischen 120 µm und 160 µm; oder;
wobei die Dicke der dritten Schicht der Laminierungsschicht zwischen 10 µm und 200 µm, wie zwischen 10 µm und 150 µm, wie zwischen 10 µm und 100 µm, wie zwischen 20 µm und 100 µm, wie zwischen 20 µm und 50 µm, liegt; oder wobei die Dicke der dritten Schicht der Laminierungsschicht zwischen 0,5 µm und 50 µm, wie zwischen 10 µm und 50 µm, wie zwischen 10 µm und 40 µm, wie zwischen 10 µm und 40 µm, wie zwischen 20 µm und 40 µm, liegt, zwischen 20 µm und 30 µm.

12. Dachfenster nach einem der vorhergehenden Ansprüche 8 bis 11, wobei die erste Glasscheibe (11b) und die zweite Glasscheibe (11a) temperiert sind, wie thermisch temperierte Glasscheiben.

13. Dachfenster nach einem der vorhergehenden Ansprüche 8 bis 12, wobei, wenn das Dachfenster Stößen ausgesetzt ist; die Schwankung in Dezibel (dB) über einen Bereich von 1000 Hz in dem Intervall von 20 Hz bis 13000 Hz nicht größer als 10 dB ist; oder wobei die Schwankung in dB über einen Bereich von 1000 Hz in dem Intervall von 3000 Hz bis 7000 Hz nicht größer als 10 dB ist; oder wobei die Schwankung in dB über einen Bereich von 1000 Hz im Intervall von 4500 Hz bis 5500 Hz 10 dB nicht überschreitet.

14. Dachfenster nach einem der vorhergehenden Ansprüche 8 bis 13, wobei die Laminierungsschicht (2) eine lokale Dämpfung von mindestens 5 dB über den Bereich von 1000 Hz im Vergleich zu Frequenzen oberhalb und/oder unterhalb des Bereichs von 1000 Hz im Vergleich zu:
eine ähnliche laminierte VIG-Einheit, die mit einem einlagigen PVB-Material laminiert ist, das eine Dicke zwischen 0,5 und 1,6 mm aufweist; oder
eine ähnliche laminierte VIG-Einheit, die mit einer Standardakustischen PVB-Schicht laminiert ist; oder
eine laminierte VIG-Einheit, die mit einer Laminierungsschicht laminiert ist, die hinsichtlich des akustischen Dämpfungsverhaltens einige der gleichen Eigenschaften aufweist.

15. Dachfenster nach einem der vorhergehenden Ansprüche 11 bis 14, wobei die Stöße, die dem Dachfenster ausgesetzt sind, Regen ist.

## Revendications

1. Fenêtre de toit (1) comprenant un cadre et une unité (11) de verre isolé sous vide stratifié (VIG stratifié) fixée dans ledit cadre, l'unité de VIG stratifié (11) comprenant :
une première feuille de verre (11b) et une seconde feuille de verre (11a),
dans laquelle les première et seconde feuilles de verre sont séparées par un espace sous vide (13), et dans laquelle une pluralité de structures de support (12) est répartie à l'intérieur de l'espace sous vide (13) entre les première et seconde feuilles de verre,
une couche de stratification (2) agencée entre la première feuille de verre (11b) et une autre feuille (3), ladite couche de stratification (2) est collée à une surface principale extérieure de la première feuille de verre faisant face à l'espace sous vide, dans laquelle la couche de stratification (2) comprend au moins une première couche et une deuxième couche d'un matériau polymère,
dans laquelle la couche de stratification (2) prévoit que la fluctuation en décibels (dB) sur une plage de 1000 Hz dans l'intervalle de 20 Hz à 13000 Hz ne dépassera pas 10 dB lorsque la fenêtre de toit est exposée à des impacts.

2. Fenêtre de toit selon la revendication 1, dans laquelle la couche de stratification (2) comprend une troisième couche d'un matériau polymère prise en tenaille entre la première couche et la deuxième couche.

3. Fenêtre de toit selon la revendication 2, dans laquelle la troisième couche a une température de transition vitreuse inférieure à celle de la première couche et de la deuxième couche.

4. Fenêtre de toit selon l'une quelconque des revendications précédentes, dans laquelle la couche de stratification (2) assure un amortissement local d'au moins 5 dB sur ladite plage de 1000 Hz par rapport à des fréquences supérieures et/ou inférieures à ladite plage de 1000 Hz, par rapport à :
- une unité de VIG stratifié similaire stratifiée avec un matériau PVB monocouche ayant une épaisseur comprise entre 0,5 et 1,6 mm ; ou
- une unité de VIG stratifié similaire stratifiée avec une couche PVB acoustique standard ; ou
- une unité de VIG stratifié qui est stratifiée avec une couche de stratification ayant certaines des mêmes propriétés en ce qui concerne les performances d'amortissement acoustique.

5. Fenêtre de toit selon l'une quelconque des revendications 2 à 4, dans laquelle l'épaisseur de la troisième couche de la couche de stratification (2) est comprise entre 80 µm et 300 µm, par exemple entre 100 µm et 200 µm, par exemple entre 120 µm et 160 µm ; ou est comprise entre 10 µm et 200 µm, par exemple entre 10 µm et 150 µm, par exemple entre 10 µm et 100 µm, par exemple entre 20 µm et 100 µm, par exemple entre 20 µm et 50 µm ; ou est comprise entre 0,5 µm et 50 µm, par exemple entre 10 µm et 50 µm, par exemple entre 10 µm et 40 µm, par exemple entre 20 µm et 40 µm, par exemple entre 20 µm et 30 µm.

6. Fenêtre de toit selon l'une quelconque des revendications précédentes, dans laquelle la première feuille de verre (11b) et la seconde feuille de verre (11a) sont trempées, telles que des feuilles de verre trempées thermiquement.

7. Fenêtre de toit selon l'une quelconque des revendications précédentes, dans laquelle les impacts exposés à la fenêtre de toit sont la pluie.

8. Fenêtre de toit (1) comprenant un cadre et une unité (11) de verre isolé sous vide stratifié (VIG stratifié) fixée dans ledit cadre, l'unité de VIG stratifié (11) comprenant :
une première feuille de verre (11b) et une seconde feuille de verre (11a),
dans laquelle les première et seconde feuilles de verre sont séparées par un espace sous vide (13), et dans laquelle une pluralité de structures de support (12) est répartie à l'intérieur de l'espace sous vide (13) entre les première et seconde feuilles de verre,
une couche de stratification (2) agencée entre la première feuille de verre (11b) et une autre feuille (3), ladite couche de stratification (2) est collée à une surface principale extérieure de la première feuille de verre faisant face à l'espace sous vide, dans laquelle la couche de stratification (2) comprend au moins une première couche et une deuxième couche d'un matériau polymère, et dans laquelle la couche de stratification comprend également une troisième couche prise en tenaille entre la première couche et la deuxième couche.

9. Fenêtre de toit selon la revendication 8, dans laquelle la troisième couche a une température de transition vitreuse inférieure à celle de la première et de la deuxième couche.

10. Fenêtre de toit selon les revendications 8 ou 9, dans laquelle la troisième couche est constituée d'un matériau polymère.

11. Fenêtre de toit selon l'une quelconque des revendications 8 à 10, dans laquelle l'épaisseur de la troisième couche de la couche de stratification (2) est comprise entre 80 µm et 300 µm, par exemple entre 100 µm et 200 µm, par exemple entre 120 µm et 160 µm ; ou
dans laquelle l'épaisseur de la troisième couche de la couche de stratification est comprise entre 10 µm et 200 µm, par exemple entre 10 µm et 150 µm, par exemple entre 10 µm et 100 µm, par exemple entre 20 µm et 100 µm, par exemple entre 20 µm et 50 µm ; ou dans laquelle l'épaisseur de la troisième couche de la couche de stratification est comprise entre 0,5 µm et 50 µm, par exemple entre 10 µm et 50 µm, par exemple entre 10 µm et 40 µm, par exemple entre 20 µm et 40 µm, par exemple entre 20 µm et 30 µm.

12. Fenêtre de toit selon l'une quelconque des revendications précédentes 8 à 11, dans laquelle la première feuille de verre (11b) et la seconde feuille de verre (11a) sont trempées, telles que des feuilles de verre trempées thermiquement.

13. Fenêtre de toit selon l'une quelconque des revendications précédentes 8 à 12, dans laquelle lorsque la fenêtre de toit est exposée à des impacts ; la fluctuation en décibels (dB) sur une plage de 1000 Hz dans l'intervalle de 20 Hz à 13000 Hz ne dépassera pas 10 dB ; ou dans laquelle la fluctuation en dB sur une plage de 1000 Hz dans l'intervalle de 3000 Hz à 7000 Hz ne dépassera pas 10 dB ; ou dans laquelle la fluctuation en dB sur une plage de 1000 Hz dans l'intervalle de 4500 Hz à 5500 Hz ne dépassera pas 10 dB.

14. Fenêtre de toit selon l'une quelconque des revendications précédentes 8 à 13, dans laquelle la couche de stratification (2) assure un amortissement local d'au moins 5 dB sur ladite plage de 1000 Hz par rapport à des fréquences supérieures et/ou inférieures à ladite plage de 1000 Hz, par rapport à :
- une unité de VIG stratifié similaire stratifiée avec un matériau PVB monocouche ayant une épaisseur comprise entre 0,5 et 1,6 mm ; ou
- une unité de VIG stratifié similaire stratifiée avec une couche PVB acoustique standard ; ou
- une unité de VIG stratifié qui est stratifiée avec une couche de stratification ayant certaines des mêmes propriétés en ce qui concerne les performances d'amortissement acoustique.

15. Fenêtre de toit selon l'une quelconque des revendications précédentes 11 à 14, dans laquelle les impacts exposés à la fenêtre de toit sont la pluie.
